# EUROPEAN PATENT APPLICATION

(11) **EP 2 144 376 A1**
(43) Date of publication of application: **13.01.2010**
(21) Application number: 06101689.5
(22) Date of filing: 15.02.2006
(51) Int. Cl.: H04B 1/38, H01Q 1/24

(54) **Mobile terminal**

(71) Applicant: Palm, Inc., Sunnyvale, CA 94085-2801 (US)
(72) Inventor: The designation of the inventor has not yet been filed
(74) Representative: Samson & Partner

(57) **Abstract**

For a mobile terminal for at least one receiving and transmitting wireless transmission, in particular for use in a wireless telecommunication system, it is proposed that an electrical connection arrangement between a first body and a second body of a casing, which are moveable with respect to each other by means of a relative movement mechanism (16) linking between two bodies, is provided with at least one high frequency choke or is arranged such that it serves as high frequency choke, the high frequency choke being adapted to limit or suppress high frequency AC currents flowing between two conducting chassis parts (12, 14) of the first body and the second body, respectively, via the electrical connection arrangement (30, 32, 34) and being caused by a high frequency interaction between an antenna arrangement (22) and the conducting chassis part (12) of at least one of the two bodies associated to wireless transmissions received or transmitted in the predetermined frequency band or at least one lower frequency band of a plurality of frequency bands.

## Description

The invention relates to a mobile terminal for at least one of receiving wireless transmissions from an transmitter and transmitting wireless transmission to a receiver, in particular for use in a wireless telecommunication system, comprising: a casing with a first body and a second body, each body having electronic means preferrably including at least one element of the group consisting of a control element arrangement, at least one display element, electronic circuitry, high frequency circuitry and a storage battery, the control element arrangement and the display element, if provided, being accommodated in a respective surface of the respective body and the electronic circuitry, the high frequency circuitry and the storage battery, if provided, being arranged within the respective body; a relative movement mechanism linking the first body and the second body and allowing a relative movement between the two bodies at least between a first operational relative position and a second operational relative position; an electrical connection arrangement electrically connecting a first conducting chassis part of the first body and a second conducting chassis part of the second body and connecting at least one of signal or data and control lines and power supply lines between electronic means of the first body and electronic means of the second body; an antenna arrangement provided on or within one of the two bodies, the antenna arrangement together with associated high frequency circuitry being adapted to at least one of receiving wireless transmissions and transmitting wireless transmissions in at least one predetermined frequency band.

In particular, the invention relates to such a mobile terminal in the form of a mobile telephone, e.g. of the clam shell type, where the relative movement mechanism is provided in the form of a hinge mechanism, comprising at least one hinge which allows a swivelling or folding movement of the two bodies with respect to each other. However, also other relative movement mechanisms such as a slider mechanism allowing a sliding movement between the two bodies are within the scope of the invention.

When designing antennas for frequencies where the wavelength in air is much larger that the maximum dimension of the mobile unit, it is common knowledge that radiation from the mobile unit and receiving radiation in the mobile unit is based on a close interaction between the antenna element and the conductive parts (referred to as the chassis) within the phone. It is also known that there is a close relationship between the dimensions of an antenna and the obtainable bandwidth.

When designing antennas for electrical small mobile units it is a necessity to utilize the chassis inside the mobile as radiating element, whereby the antenna acts like an electromagnetic transducer or coupler and the chassis as the radiating part. At low frequencies, like GSM 850 and GSM 900, a large part of the radiation will occur from the chassis, while at higher frequencies like GSM 1800, GSM 1900 and UMTS more radiation will occur from the antenna element itself.

So the design of antennas for optimum bandwidth at low frequencies is limited by how good the electromagnetic coupling between the antenna and the chassis of the mobile unit is, and how good the design is of the electric matching circuit. In addition, the overall size of the antenna and the chassis, together with the position of the antenna compared to the chassis is also a determining factor for the bandwidth.

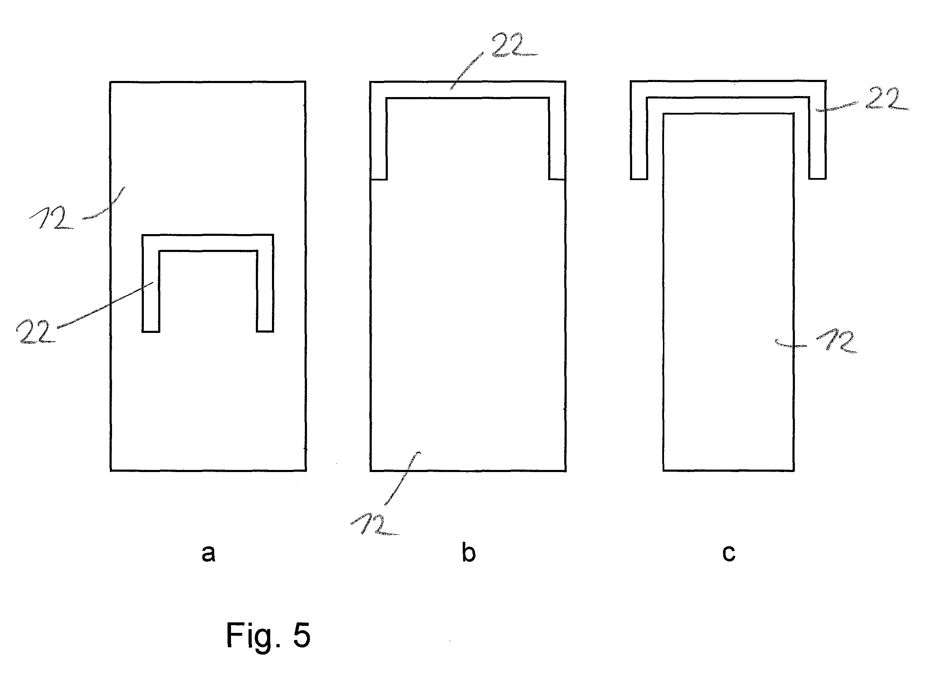

Having the antenna located at the middle of the chassis, as shown in Fig. 5a, results in a bad electromagnetic coupling and thereby a reduced bandwidth. The electromagnetic coupling is increased the closer the antenna is the edge of the chassis (Fig. 5b) and the best electromagnetic coupling is achieved when the antenna is located outside the chassis (Fig. 5c).

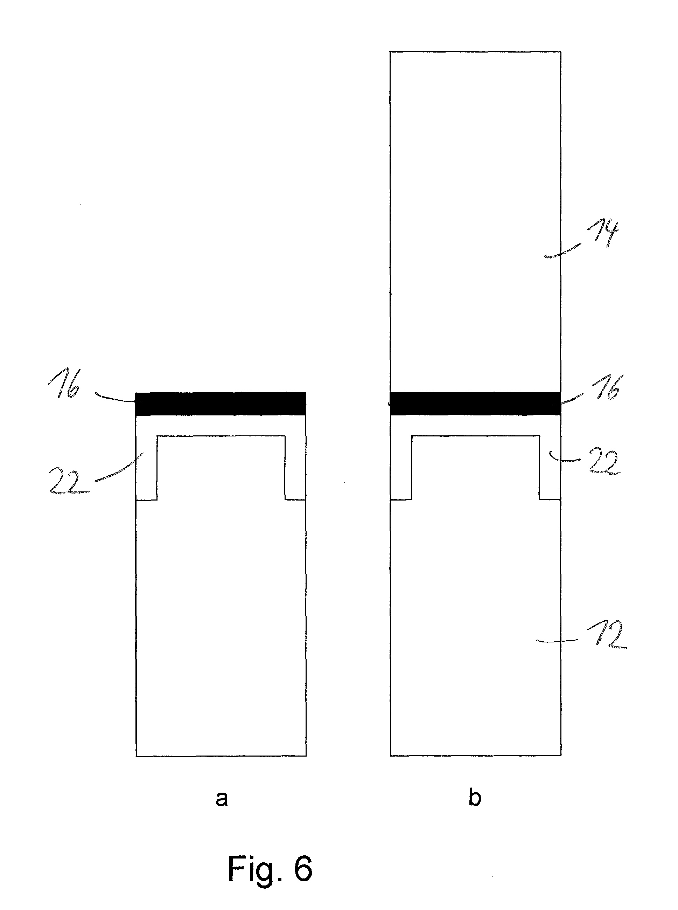

One of the problems when designing antennas for clam shell phones is that the length of the chassis changes when the phone is opened. Also, if the antenna is placed in the same end of the phone as the hinges, then the position of the antenna compared to the chassis is also changed when opening the phone, as shown in Fig. 6. The antenna is almost positioned in the middle of the chassis, when the phone is open and this reduces the electromagnetic coupling between the antenna and chassis, which results in a reduced bandwidth, especially for the low frequencies.

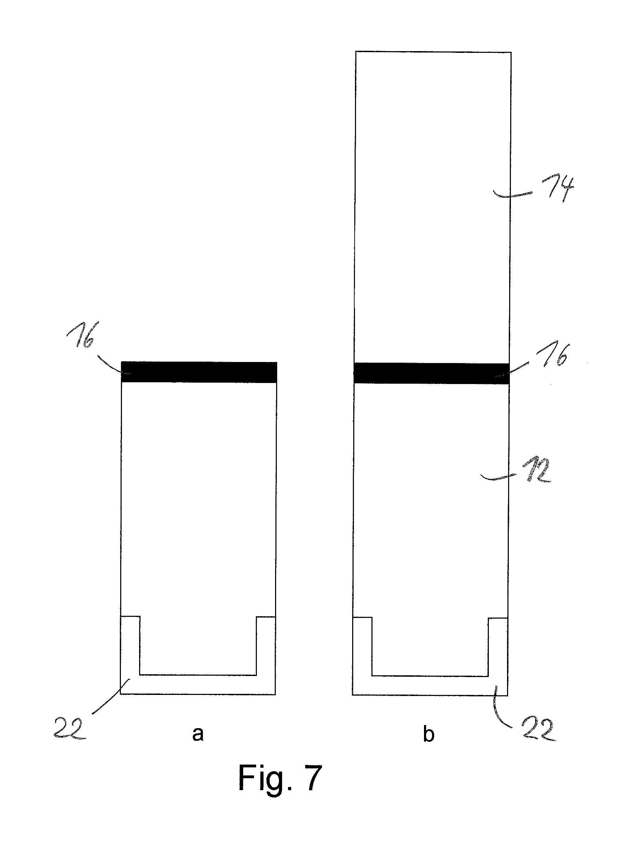

Normally, this reduction of bandwidth in open position has just been accepted as a restriction when designing antennas for clam shell phones. However, in resent years clam shell phone with the antenna located in the opposite side of the hinge has been introduced to the marked, see Fig. 7. Having the antenna located in the opposite side of the hinge keeps the antenna positioned at the edge of the chassis when the phone is closed and opened, which ensures a good electromagnetic coupling between the antenna and chassis. With this configuration the best bandwidth for the low frequencies might be obtained in open position due to the bigger size of the chassis. However, having the antenna in the bottom of the chassis might not always be a desirable solution, due to the stack-up and design of the phone.

It is an object of the invention to reduce the high frequency coupling between the two bodies or the first conducting chassis part and the second conducting chassis part thereof, so that an improved bandwidth for at least one frequency, in particular for at least one frequency band can be achieved on the one hand and it is not necessary to locate the antenna in a certain position to take into account that there is a first body and a second body of the casing which can be moved between different relative positions.

This object is achieved for the mobile terminal identified above by providing the electrical connection arrangement with at least one high frequency choke or by arranging the electrical connection arrangement such that it serves as high frequency choke. According to the invention this high frequency choke is adapted to limit or suppress high frequency AC currents flowing between the two conducting chassis parts via the electrical connection arrangement and being caused by a high frequency interaction between the antenna arrangement and the conducting chassis part of at least one of the two bodies, said high frequency interaction being associated to wireless transmissions received or transmitted in the predetermined frequency band or at least one lower frequency band of a plurality of frequency bands.

The antenna arrangement, e.g. provided by at least one patch antenna element, e.g. inverted F patch antenna element or inverted L patch antenna element, interacts strongly with one of the two conducting chassis parts by wireless high frequency interaction, generally with the conducting chassis part carrying the antenna arrangement. There will be also a certain wireless high frequency interaction with the other conducting chassis part. However, this interaction has less relevance for the bandwidth performance than an electrical coupling between the two conducting chassis parts via the electrical connection arrangement. Accordingly, the invention proposes to limit or suppress (or block) high frequency AC currents flowing between the two conducting chassis parts via the electrical connection arrangement, namely such high frequency AC currents which are caused by the high frequency interaction between the antenna arrangement and the respective conducting chassis part, said high frequency interaction being associated to respective wireless transmission received or transmitted.

According to the invention, the coupling between the two bodies or two conducting chassis parts, e.g. the coupling between the main part and a flip part of a clam shell phone for a certain frequency range, in particular for low frequencies is reduced, so that for the electrical radiating and receiving characteristics only one body or conducting chassis part (generally the body or conducting chassis part having the antenna arrangement, e.g. the main part of an clam shell phone) is relevant, irrespectively of the relative position of the two bodies (i.e. also in the open position of the clam shell phone). By electrically removing the other body or conducting chassis part (e.g. flip part of the open clam shell phone) from the chassis having the antenna arrangement, the antenna arrangement can be positioned without need to fulfill certain requirements with respect to the other body or conducting chassis part as can be done for ordinary mobile terminals having only one body or one conducting chassis part. Accordingly, in the case of a clam shell phone it is possible to locate the antenna at the same end of the phone as the hinge mechanism linking the two bodies as shown in Fig. 6. From an electrical point of view the antenna is nevertheless not located in the middle of an overall chassis but only at the end of the relevant conducting chassis part, and this applies also in the open condition of the phone, so that the electromagnetic coupling of the antenna to the chassis is increased, with the result that an improved bandwidth performance for the frequencies of interest, in particular for low frequencies, is achieved.

In particular, an increased bandwidth for low frequencies (e.g. GSM 850 and GSM 900) on an electrical small mobile unit, in particular an electrical small clam shell mobile unit in its open position, can be achieved also when the antenna is located close to the relative movement mechanism, in particular hinge mechanism or hinges of the unit, without need to significantly increase the overall size of the mobile unit to implement the invention.

The conducting chassis parts are generally formed by a printed circuit board or generally comprise a printed circuit board. However, also other structures serving as chassis part lie in the scope of the invention.

Generally, the electrical connection arrangement in such mobile terminals comprises at least one flexible cable or/and at least one flexible printed circuit board connected between a first connector arrangement of the first conducting chassis part and a second connector arrangement of the second conducting chassis part. It is proposed to provide the high frequency choke in association to the flexible cable or the flexible printed cicuit board (flex PCB).

The high frequency choke may be provided on basis of at least one of a transmission line effect, a high frequency resonance effect and an inductive effect. In particular, it is proposed to provide the high frequency choke (radio frequency choke or microwave frequency choke) in the form of a so-called current balun as known from microwave technology or radio frequency antenna technology. A high frequency choke in the sense of the invention is in principle everything that does not pass or suppresses or limits a radio frequency or microwave frequency signal but allows a DC or a very low frequency signal to pass through. In microwave and RF technology series inductors are often used at RF chokes, as well as quarter-wave structures or quarter-wave transmission lines. Other approaches to implement an RF choke or current balun are based on forming coils or/and by providing magnetic material, in particular ferrite material to achieve an inductive effect limiting or suppressing undesired high frequency AC currents. Accordingly, the high frequency choke may be formed on basis of at least one transmission line or/and at least one inductor or/and magnetic material, in particular ferrite material, associated to at least one conductor of said at least one flexible cable or said at least one flexible printed circuit board.

For the frequency ranges of interest in the context of wireless telecommunication systems, in particular mobile telephone systems, quarter-wave or quarter wavelength structures or (more generally) transmission line, resonator and filter structures are particular useful for implementing the invention. In this respect it is proposed for the mobile terminal according to the invention that at least in one operational relative position of the two bodies at least one transmission line is formed by at least one conductor of said at least one flexible cable or said at least one flexible printed circuit board on the one hand and at least one of said conducting chassis parts on the other hand, said transmission line extending between said conducting chassis parts and having such an effective electrical length for a frequency within the predetermined frequency band or within the lower frequency band, that a DC short circuit at one end of the transmission line is transformed into a high frequency open circuit at the other end of the transmission line or a relevant section of the transmission line for a resonance frequency within the predetermined frequency band or within the lower frequency band, so that a DC connection between said conducting chassis parts is established via said DC short circuit and that the high frequency AC currents are blocked by the high frequency open circuit or are subject to a high input impedance of the transmission line or the relevant section of the transmission line.

The DC connection will generally serve to provide a common ground comprising the two conducting chassis parts. Similar as applying the invention to this DC connection the invention may also be applied to other connections between the two conducting chassis parts, such as signal or data or control connections and power supply connections, as far as such other connections would lead to a relevant coupling between the two conducting chassis parts on basis of high frequency AC currents flowing over these connections between the two conducting chassis parts.

Appropriately, the transmission line or the relevant section thereof may have an effective electrical length corresponding to a quarter wavelength for said resonance frequency or corresponding to an uneven-numbered multiple thereof to implement the invention. For mobile terminals of particular interest, namely mobile telephones, the geometric length(s) of the casing or the first and second body thereof and the first and second conducting chassis part, respectively, are generally such that a quarter wavelength is in the order or even longer than said geometric length(s). Accordingly, it is sensible to choose the effective electrical length to correspond to a quarter wavelength for said resonance frequency.

To achieve the effective electrical length, e.g. a quarter wavelength or an uneven-numbered multiple thereof for the resonance frequency, the transmission line may at least partly be folded or twisted. This allows to implement the invention also in cases, where the geometric length of the two casing bodies or the two conducting chassis parts is shorter than a quarter wavelength at the resonance frequency. In this respect it is alternatively or additionally proposed that at least in a section of the transmission line dielectric material having a dielectric constant higher than air is provided between said conductor and a respective of said conducting chassis parts to achieve said effective electrical length over a given geometric distance or said given geometric distance. On basis of this measure the electrical length of a structure having a certain geometric length can be increased. For example, teflon material or ceramic material can appropriately be used to provide a electrical length of a quarter wavelength over a geometric length of e.g. 59 mm (teflon) or e.g. 26 mm (ceramic material) which without the dielectric material would need a geometric length of around 83 mm.

As already mentioned, it is generally appropriate that the antenna arrangement shall interact with the conducting chassis part having the antenna arrangement for providing the wireless receiving and transmitting functionality and that the coupling to the other conducting chassis part via the electrical connection arrangement shall be reduced by means of the high frequency choke. For such circumstances it is proposed that said high frequency open circuit or the high input impedance is arranged on the side of the body or conducting chassis part which is provided with the antenna arrangement and wherein said end of said transmission line which is DC shortened is arranged at the other body or other conducting chassis part.

Concerning the high frequency currents transmitting characteristics of the electrical connection arrangement in such an embodiment that section of the transmission line which extends with a spacing over the other constructing chassis part is of particular relevance, whereas that section (if any) of the transmission line which extends over the conducting chassis being provided with the antenna arrangement is less relevant. Accordingly, the relevant section of the transmission line having the effective electrical length for achieving the high frequency choke effect will basically be that section of the transmission line which, at least in one operational relative position, extend with a spacing over the other conducting chassis part. However, even if there also is a certain effect of a section of the transmission line extending over the conducting chassis part having the antenna arrangement, this additional effect would easily be taken into account by appropriately optimizing the length of the relevant section and the overall length of the transmission line.

As already mentioned, the relative movement mechanism may comprise at least one hinge effective between the two bodies, allowing a swivelling or folding movement of the two bodies with respect to each other between a closed operational relative position in which two surfaces of the two bodies face and cover each other and an open operational relative position in which the two surfaces both are uncovered. In said open operational relative position the two bodies may extend under an angle between each other, possibly flatwise one besides the other.

According to a preferred embodiment the antenna arrangement together with associated high frequency circuitry are adapted to at least one of receiving wireless transmissions and transmitting wireless transmissions in at least one frequency band in a frequency range below or at about 1 GHz, in particular in at least one of the GSM 850 and the GSM 900 frequency band, the high frequency choke being effective to limit or suppress high frequency AC currents flowing between the two conducting chassis parts via the electrical connection arrangement and which are caused by high frequency interaction between the conducting chassis part and the antenna arrangement associated to said wireless transmissions in said frequency band in said a frequency range below or at about 1 GHz.

According to this embodiment or alternatively according to a different embodiment the antenna arrangement together with associated high frequency circuitry are adapted to at least one of receiving wireless transmissions and transmitting wireless transmissions in at least one frequency band in a frequency range well above 1 GHz, in particular in at least one of the GSM 1800 and the GSM 1900 and the UMTS frequency band. Concerning the embodiment adapted for wireless transmitting or/and receiving functionality in the frequency range below or about 1 GHz as well as in the frequency range right above 1 GHz, it is further proposed that the high frequency choke is not effective to substantially limit or suppress high frequency AC currents flowing between the two conducting chassis parts via the electrical connection arrangement and which are caused by high frequency interaction between the conducting chassis part and the antenna arrangement associated to said wireless transmissions in said frequency band in said frequency range well above 1 GHz.

With reference to the above proposal to implement the higher frequency choke on basis of at least one transmission line the high frequency AC currents caused by high frequency interaction between the conducting chassis part and the antenna arrangement associated to said wireless transmissions in said frequency band well above 1 GHz can be subject to an input impedance of the transmission line or the relevant section of the transmission line which is substantial smaller than the high input impedance which is effective for said high frequency AC currents caused by high frequency interaction between the conducting chassis part and the antenna arrangement associated to said wireless transmissions in said frequency band in said frequency range below or at about 1 GHz.

The invention is further explained and illustrated on basis of exemplary embodiments shown in Figs. 1 to 3 and measurement results shown in Fig. 4, also with reference to Figs. 5 to 7 which relate to the technical background and the prior art.

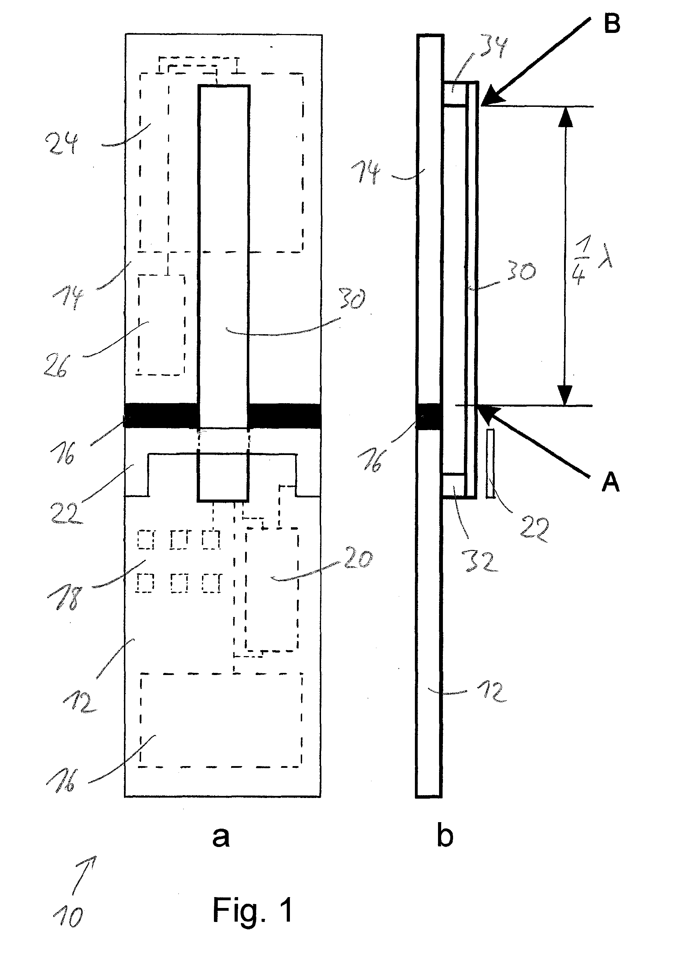

- Fig. 1: shows in figure parts a) and b) schematically a mobile telephone of the clam shell type in its open condition having implemented the invention by a high frequency choke associated to a flex PCB arrangement connecting the main part and the flip part of the mobile telephone.

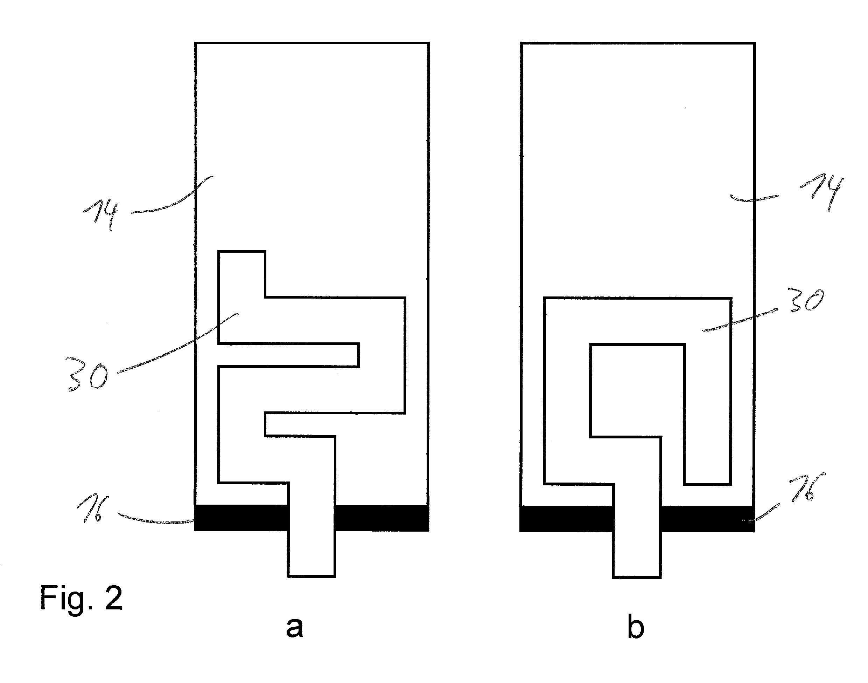

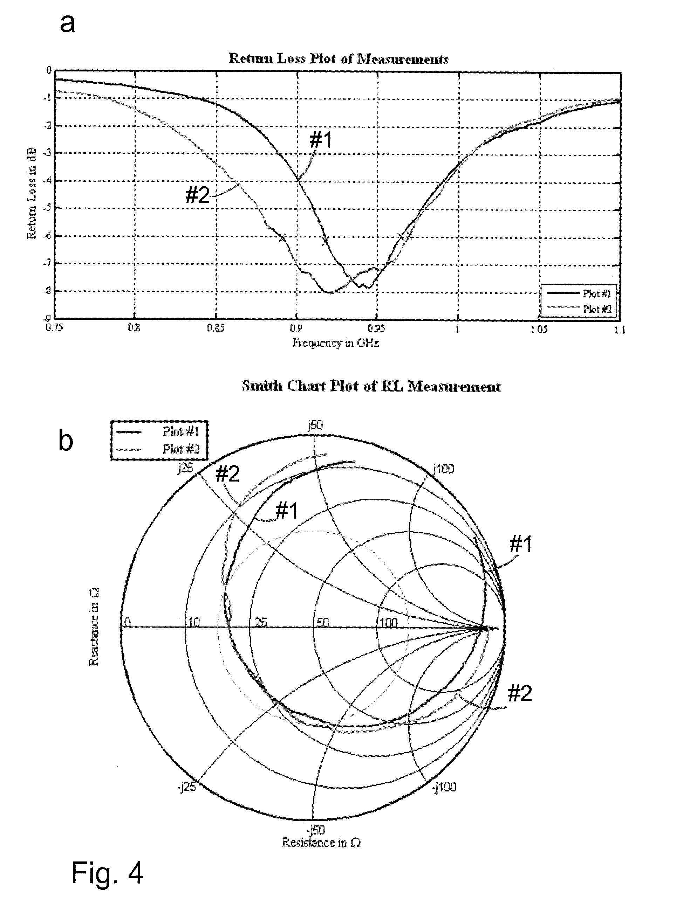

- Fig. 2: shows in parts a) and b) alternate embodiments of the flex PCB to achieve a certain electrical length over a certain geometrical length for realisation of the high frequency choke.

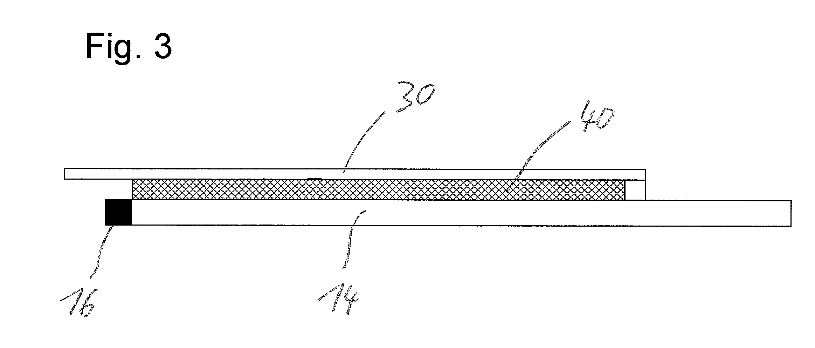

- Fig. 3: shows a further alternate embodiment of the arrangement of the flex PCB in which a dielectric is located between the flex PCB and the flip part chassis of the mobile telephone.
- Fig. 4: shows in part a) a return loss plot and in part b) a smith chart plot showing an increased bandwidth performance for a mobile telephone according to the invention in comparison to a mobile telephone without high frequency choke.
- Fig. 5: shows in parts a), b) and c) possible places for an antenna arrangement on the chassis of a mobile telephone and is used to explain the background of the invention.
- Fig. 6: shows schematically a clam shell telephone according to the prior art having the antenna arrangement positioned adjacent a hinge mechanism between the main part and the flip part of the clam shell telephone and suffering from bandwidth performance problems.
- Fig. 7: shows schematically a solution of the prior art to improve the bandwidth performance by positioning the antenna arrangement distant from the hinge mechanism on the other end of the main part of the clam shell mobile telephone.

The invention is further explained, illustrated and exemplified on basis of mobile telephones of the clam shell type. However, the invention may also be implemented in other mobile terminals adapted to receive wireless transmissions from a transmitter or/and adapted for transmitting wireless transmissions to a receiver, in particular for use in a wireless telecommunication system. In particular, the invention can also be applied to other mobile telephones not according to the clam shell type, for example mobile telephones (or other mobile terminals) having a slider mechanism linking two bodies which can be moved with respect to each other.

Fig. 1 shows schematically a clam shell mobile telephone having a main part 12 and a flip part 14 linked by a hinge mechanism 16 allowing a swivelling or folding relative movement of the flip part and the main part with respect to each other between a closed position and an open position. The latter position is shown in Fig. 1. The two parts (main part and flip part) are represented in Fig. 1 by a respective conducting chassis carrying electronic means. Generally, the chassis 12 with its electronic means is embedded in a main casing body of the telephone and the chassis 14 with its electronic means is embedded in a flip casing body of the telephone. For illustration a battery pack 16, a control element arrangement 18 and high frequency circuitry 20 is shown on the main part 12 together with a control, data and high frequency line arrangement. The high frequency circuitry drives a patch antenna element 22 associated to the main part 12 and located besides the hinge mechanism 16. Further, the flip part 14 is provided with a display 24 and a electronic processor 26. Of course, the battery pack 16, the high frequency circuitry 20 and the electronic processor 26 are located within the respective casing body whereas the control element arrangement and the display element are accommodated on a respective surface of the respective casing body, so that the user can access the control elements and view the display.

The electrical connection between the main part and the flip part of a clam shell phone is normally done using at least one flex PCB, possibly having integrally a number of flex PCB layers arranged one over the other or a stack of separate flex PCBs. Such a flex PCB arrangement is also realised in case of the embodiment shown in Fig. 1 and is denoted with the reference sign 30. The flex PCB arrangement (in the following onyl denoted as flex PCB) extends between a connector 32 on the main part or chassis 12 and a connector 34 on the flip part or chassis 14. The flex PCB may extend between the patch antenna element 22 and the chassis 12 (as shown in Fig. 1) or - alternatively - over the patch antenna element 22.

For illustration, several electronic or electric lines are shown on the two chassis parts 12 and 14, which appropriately may be realised in the form of printed circuit boards, which could have a ground layer or ground sections and control, data and other electronic and electric lines isolated from the ground sections or ground layer. For example, Fig. 1 shows in figure part a) a line connecting the patch antenna element 22 and the high frequency circuitry 20 for driving the patch antenna element by the high frequency circuitry. Further, there are lines connecting the battery pack 16 and the control element arrangement 18 with the electronic processor 26 and the display 24 on the other chassis part 14 via connecting lines of the flex PCB. Further, the flex PCB provides a grounding connection between the ground sections or ground layer of the chassis 12 and the ground sections or ground layer of the chassis 14. For this grounding connection it is appropriate to provide the flex PCB with a conductive layer which can be the layer nearest to the two chassis parts 12 and 14.

The invention is based on the understanding that the implementation of the flex PCB or any other conducting means between the two chassis parts determines, how well the main part couples to the flip part for different frequencies and therefore, how large a contribution of the flip part to the overall electrical size of the chassis is for a given frequency. The invention proposes to design the flex PCB or any other conducting means connecting the two chassis parts so that the coupling between the main part and the flip part is very small for a certain frequency range of interest, in particular for low frequencies, e.g. GSM 850 and GSM 900.

Assuming that the antenna element is arranged on the main part, the chassis relevant for the radiating and receiving characteristics of the telephone, according to the invention, will at these frequencies electrically almost only consist of the main part of the phone and the antenna element is electrically located at the edge of this chassis instead of in the middle of this chassis, although from a geometrical point of view the antenna is arranged besides the hinge arrangement and accordingly in the middle of an overall chassis comprising the main part 12 and the flip part 14. This is achieved by providing the flex PCB (or any other electrical connection arrangement) with at least one high frequency choke or by arranging the flex PCB (or any other electrical connection arrangement) such that it serves as high frequency choke, so that an isolation between the two parts of the clam shell phone is obtained which prevents that currents caused by the interaction of the chassis (main part) and antenna run up to the flip part via the flex PCB (or any other electrical connection arrangement). In the embodiment shown here this isolation is achieved by designing a so-called Quarter Wave Choke in the flex PCB that will stop or suppress or at least limit these currents in a given frequency range.

In the embodiment shown, the conductive layer of the flex PCB 30 closest to the flip part 14 is a good ground while layers above that conductive layer are used to provide connecting lines for various data signals and other electrical connections. Without the isolation achieved by the invention the ground currents would run from the main part 12 through the main flex connector 32, through the ground layer of the flex PCB 30, through the flip part flex connector 34 and onto the flip part 14. However, according to the invention these currents, when they reach point A shown in Fig. 1b) will be stopped, suppressed or limited, since the remaining part of the flex PCB 30 together with the flex connector 34 on the flip part 14 and the area of the flip part 14 under the flex PCB will act as a closed end stub (closed on the side of the flip part 14) or a Quarter Wave Choke and have a high impendance for the respective given frequency range. This is achieved by a transmission line effect which transforms the closed end of the stub into an open end at the input side. To this end the resonance frequency of the Quarter Wave Choke, which is decided by the distance from A to B (cf. Fig. 1b)) is selected appropriately and is a quarter wavelength for a relevant or center frequency of the desired frequency range. The bandwidth of the Quarter Wave Choke is determined by the distance between the flex PCB 30 and the flip part 14. Generally, a high wave resistance of the transmission line is desired to achieve a large bandwidth.

In the present case the Quarter Wave Choke is provided by a transmission line corresponding or very similar to a microstrip transmission line as conventionally known in the prior art. For the choking or balun effect of the flex PCB basically only the section between points A and B of the flex PCB 30 is relevant. Currents in the main part 12 and the section of the flex PCB 30 between point A and the connector 32 will run according to a common mode, so that point A can be considered to be the input side of the Quarter Wave Choke.

Designing the Quarter Wave Choke to operate at GSM 900 and/or GSM 850 will electrically reduce the effect of the flip part and increase the bandwidth of the antenna at these frequencies. The Quarter Wave Choke will have low impedance at the higher frequencies like GSM 1800, GSM 1900 and UMTS and will therefore not affect the bandwidth obtained at these frequencies.

A quarter wavelength at GSM 900 is around 83 mm, which is rather long for an small clam shell phone. However, it is possible the reduce the length by either twisting the flex PCB as shown in Figure 2 or by using a dielectric between the flex PCB and the flip part as shown Figure 3.

The Flex PCB may be twisted in any shape and the only requirement that needs to be fulfilled is that the electrical length of the Flex PCB must be equal the a quarter wavelength (or an uneven-numbered multiple thereof) of the desired frequency.

The total length of the flex PCB can be reduced by the square root of the dielectric constant of a material used as dielectric between the flex PCB and the chassis. A dielectric constant of 2.05 (Teflon) will reduce the length to 59 mm while a dielectric constant of 10 (Ceramic material) will reduce the length to 26 mm. However, the loss tangent of the chosen dielectric material should be low in order to avoid a high additional loss in the Quarter Wave Choke. The dielectric material is denoted as 40 in Fig. 3.

It should be added that in principle the choking or balun effect of the invention can also be achieved by other means, for example by providing at least one inductor, possibly series inductors, or/and magnetic material e.g. ferrite material. However, for the frequency ranges relevant for mobile telephone systems it is most appropriate to implement the invention on basis of at least one transmission line.

By realising the Quarter Wave Choke associated to the flex PCB connecting the two chassis parts of a clam shell phone the invention has shown an improvement in the bandwidth for the low frequencies (GSM 850 and GSM 900) up to 150% in simulations and 60% in measurements. It is referred in this respect to Fig. 4 showing return loss measurements for a conventional embodiment (plot #1) and an embodiment according to the invention (plot #2). For the conventional case there is a bandwidth of about 47 MHz centered at about 941.2 MHz, whereas according to the invention there is a bandwidth of about 79.0 MHz centered at about 929.7 MHz. Fig. 4b) shows a Smith chart plot of the return loss measurements. At the same time no significant changes were observed for the bandwidth at the high frequencies (GSM 1800, GSM 1900 and UMTS). Ideally, the same bandwidth performance should be available in both closed and open position, when the invention is implemented.

Fig. 5 shows schematically possible positions of an antenna element, e.g. an inverted F patch antenna element or inverted L patch antenna element, on a chassis of a mobile telephone. The chassis is denoted as 12 and the antenna element is denoted as 22. The best coupling between the antenna element 22 and the chassis 12 is achieved for case c), when the antenna element is located outside the chassis 12. Further, very good coupling is also achieved for case b), where the antenna element 22 is located at the edge of the chassis. A relatively bad coupling is achieved for case a) where the antenna element 22 is located in the middle of the chassis 12.

Fig. 6 shows in part a) a closed clam shell phone and in part b) an open clam shell phone according to the prior art. Since the antenna element 22 is located adjacent the hinge mechanism 16, the antenna element is located at the edge of the chassis in the closed condition according to Fig. 6a) and is located more or less in the middle of an overall chassis comprising the two chassis parts 12 and 14 in the open condition according to Fig. 6b). In the closed condition according to Fig. 6a) there is a good coupling between the antenna element 22 and the effective chassis, whereas in the open condition according to Fig. 6b) there is a relatively bad coupling between the antenna element 22 and the overall chassis. Accordingly, there is a good bandwidth performance in the closed condition but only a relatively bad bandwidth performance in the open condition.

Fig. 7 shows a clam shell telephone according to the prior art, in which the antenna element 22 is located distant from the hinge mechanism at the other end of the chassis part 12 at the chassis edge. Accordingly, the antenna element is located at the edge of the chassis in the closed condition according to Fig. 7a) as well as in the open condition according to Fig. 7b).

For a mobile terminal for at least one receiving and transmitting wireless transmission, in particular for use in a wireless telecommunication system, it is proposed that an electrical connection arrangement between a first body and a second body of a casing, which are moveable with respect to each other by means of a relative movement mechanism linking between two bodies, is provided with at least one high frequency choke or is arranged such that it serves as high frequency choke, the high frequency choke being adapted to limit or suppress high frequency AC currents flowing between two conducting chassis parts of the first body and the second body, respectively, via the electrical connection arrangement (30, 32, 34) and being caused by a high frequency interaction between an antenna arrangement (22) and the conducting chassis part (12) of at least one of the two bodies associated to wireless transmissions received or transmitted in the predetermined frequency band or at least one lower frequency band of a plurality of frequency bands.

## Claims

1. Mobile terminal (10) for at least one of receiving wireless transmissions from an transmitter and transmitting wireless transmission to a receiver, in particular for use in a wireless telecommunication system, comprising:
- a casing with a first body and a second body, each body having electronic means;
- a relative movement mechanism (16) linking the first body and the second body and allowing a relative movement between the two bodies at least between a first operational relative position and a second operational relative position;
- an electrical connection arrangement (30, 32, 34) electrically connecting a first conducting chassis part (12) of the first body and a second conducting chassis part (14) of the second body and connecting at least one of signal or data and control lines and power supply lines between electronic means of the first body and electronic means of the second body;
- an antenna arrangement (22) provided on or within one of the two bodies, the antenna arrangement (22) together with associated high frequency circuitry (20) being adapted to at least one of receiving wireless transmissions and transmitting wireless transmissions in at least one predetermined frequency band;
**characterized in that**
the electrical connection arrangement is provided with at least one high frequency choke or is arranged such that it serves as high frequency choke, the high frequency choke being adapted to limit or suppress high frequency AC currents flowing between the two conducting chassis parts (12, 14) via the electrical connection arrangement (30, 32, 34) and being caused by a high frequency interaction between the antenna arrangement (22) and the conducting chassis part (12) of at least one of the two bodies associated to wireless transmissions received or transmitted in the predetermined frequency band or at least one lower frequency band of a plurality of frequency bands.

2. Mobile terminal according to claim 1, wherein the electrical connection arrangement comprises at least one flexible cable or/and at least one flexible printed circuit board (30) connected between a first connector arrangement (32) of the first conducting chassis part and a second connector arrangement (34) of the second conducting chassis part.

3. Mobile terminal according to claim 1 or 2, wherein the high frequency choke is provided on basis of at least one of a transmission line effect, a high frequency resonance effect and an inductive effect.

4. Mobile terminal according to one of claims 2 to 3, wherein at least in one operational relative position of the two bodies at least one transmission line is formed by at least one conductor of said at least one flexible cable or said at least one flexible printed circuit board (30) on the one hand and at least one of said conducting chassis parts (12, 14) on the other hand, said transmission line extending between said conducting chassis parts and having such an effective electrical length (1/4 λ) for a frequency within the predetermined frequency band or within the lower frequency band, that a DC short circuit at one end of the transmission line is transformed into a high frequency open circuit at the other end of the transmission line or a relevant section (A-B) of the transmission line for a resonance frequency within the predetermined frequency band or within the lower frequency band, so that a DC connection between said conducting chassis parts is established via said DC short circuit and that the high frequency AC currents are blocked by the high frequency open circuit or are subject to a high input impedance of the transmission line or the relevant section of the transmission line.

5. Mobile terminal according to claim 4, wherein the transmission line or the relevant section (A-B) thereof has an effective electrical length (1/4 λ) corresponding to a quarter wavelength for said resonance frequency or corresponding to an uneven-numbered multiple thereof.

6. Mobile terminal according to claim 4 or 5, wherein the transmission line is at least partially folded or twisted to achieve said effective electrical length over a given geometric distance.

7. Mobile terminal according to one of claims 4 to 6, wherein at least in a section of the transmission line dielectric material (40) having a dielectric constant higher than air is provided between said conductor and a respective of said conducting chassis parts to achieve said effective electrical length (1/4 λ) over a given geometric distance or said given geometric distance.

8. Mobile terminal according to one of claims 1 to 7, wherein the antenna arrangement (22) together with associated high frequency circuitry (20) are adapted to at least one of receiving wireless transmissions and transmitting wireless transmissions in at least one frequency band in a frequency range below or at about 1 GHz, in particular in at least one of the GSM 850 and the GSM 900 frequency band, the high frequency choke being effective to limit or suppress high frequency AC currents flowing between the two conducting chassis parts (12, 14) via the electrical connection arrangement (30, 32, 34) and which are caused by high frequency interaction between the conducting chassis part (12) and the antenna arrangement (22) associated to said wireless transmissions in said frequency band in said a frequency range below or at about 1 GHz.

9. Mobile terminal according to one or claims 1 to 8, wherein the antenna arrangement (22) together with associated high frequency circuitry (20) are adapted to at least one of receiving wireless transmissions and transmitting wireless transmissions in at least one frequency band in a frequency range well above 1 GHz, in particular in at least one of the GSM 1800 and the GSM 1900 and the UMTS frequency band.

10. Mobile terminal according to claim 8 and according to claim 9, wherein the high frequency choke is not effective to substantially limit or suppress high frequency AC currents flowing between the two conducting chassis parts (12, 14) via the electrical connection arrangement (30, 32, 34) and which are caused by high frequency interaction between the conducting chassis part (12) and the antenna arrangement (22) associated to said wireless transmissions in said frequency band in said frequency range well above 1 GHz.

11. Mobile terminal according to claim 10 and according to claim 4, wherein said high frequency AC currents caused by high frequency interaction between the conducting chassis part (12) and the antenna arrangement (22) associated to said wireless transmissions in said frequency band well above 1 GHz are subject to an input impedance of the transmission line or the relevant section (A-B) of the transmission line which is substantial smaller than the high input impedance which is effective for said high frequency AC currents caused by high frequency interaction between the conducting chassis part (12) and the antenna arrangement (22) associated to said wireless transmissions in said frequency band in said frequency range below or at about 1 GHz.

12. Mobile terminal according to one of claims 1 to 11 in the form of a mobile telephone (10), preferably of the clam shell type.
